# EUROPÄISCHE PATENTSCHRIFT

(11) **EP 2 467 299 B1**
(45) Veröffentlichungstag und Bekanntmachung des Hinweises auf die Patenterteilung: **23.10.2013**
(21) Anmeldenummer: 10729878.8
(22) Anmeldetag: 07.07.2010
(51) Int. Cl.: B64D 11/00

(54) **BEFESTIGUNGSSYSTEM FÜR HÄNGEND MONTIERBARE DECKENCONTAINER**
FASTENING SYSTEM FOR HANGING MOUNTABLE OVERHEAD CONTAINERS
SYSTÈME DE FIXATION POUR DES CONTENANTS DE PLAFOND POUVANT ÊTRE SUSPENDUS À UN PLAFOND

(30) Priorität: 24.07.2009 DE 102009026250
(43) Veröffentlichungstag der Anmeldung: 27.06.2012
(73) Patentinhaber: SFS Intec Holding AG, 9435 Heerbrugg (CH)
(72) Erfinder: STIERLE, Holger, 71263 Weil der Stadt (DE)
(86) Internationale Anmeldenummer: PCT/EP2010/059694
(87) Internationale Veröffentlichungsnummer: WO 2011/009718

(56) Entgegenhaltungen:
- EP-A1- 0 514 957
- US-A- 5 108 048
- US-A1- 2004 096 263
- US-A1- 2007 284 479

## Beschreibung

Die Erfindung betrifft ein Befestigungssystem für hängend montierbare Deckencontainer wie Gepäckboxen in einem Flugzeug, mit wenigstens einem Paar an einer Tragstruktur bzw. an einem Deckencontainer angebrachten Tragösen, mit einem Bolzen zum lösbaren Miteinanderverbinden der Tragösen und mit an den Tragösen angebrachten Aufnahmehülsen für den Bolzen, die in einer Montageposition des Deckencontainers miteinander fluchten.

Im folgenden wird zwar ein solches Befestigungssystem bei dessen Einsatz bei der Montage von Deckencontainern wie Gepäckboxen an der Tragstruktur eines Flugzeuges beschrieben, ein solches Befestigungssystem ist jedoch überall dort einsetzbar, wo es darum geht, Deckencontainer hängend zu montieren. Die mit der Bolzenführung versehene eine Tragöse wird zwar vorzugsweise an der Tragstruktur befestigt, die Tragösen eines Paares könnten jedoch gegeneinander vertauscht werden. Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen, Deckencontainer und Hutablagen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, S. 23).

Bei einem bekannten Befestigungssystem der eingangs genannten Art, das für die hängende Montage von Gepäckboxen in einem Flugzeug eingesetzt wird, sind für die Montage jeder Gepäckbox mehr als drei Personen erforderlich. Wenigstens drei Personen heben die Gepäckbox in eine Montageposition. Durch jeweils einen Bolzen (Losteil) werden die Tragösen jedes Paares miteinander verbunden. Für die Montage dieser Bolzen sind spezielle Werkzeuge wie Hammer, Zange usw. nötig. Weiter ermöglicht das bekannte Befestigungssystem zwar ein sicheres Befestigen der Gepäckboxen an der Tragstruktur, wobei sich das Befestigungssystem durch Leichtigkeit, gute Kräfteaufnahme, niedrige Teilepreise und eine geringe Anzahl von Bauteilen auszeichnet, jedoch stehen dem gegenüber lange Montage- und Demontagezeiten, die relativ große Zahl von Personen, die zum Montieren und Demontieren einer Gepäckbox erforderlich ist, und das Erfordernis von Werkzeug. Die losen Bolzen können verloren gehen. Diese Einschränkungen führen dazu, dass bei der Kabinenkonfiguration von Flugzeugen darauf geachtet wird, mit möglichst wenigen Varianten auszukommen. Das ist mit einer Einbuße an Flexibilität bei der Kabinenkonfiguration verbunden. Nachteilig wirkt sich auch aus, dass die Demontage aufwändig ist, da die Bolzen nur schwer und üblicherweise nur mit Spezialwerkzeug wieder gelöst werden können.

Ein wesentlicher Stand der Technik ist durch US 5,108,048 A1 begeben. Aus dem Dokument EP 0 514 957 A1 ist ein Befestigungssystem für hängend montierbare Deckencontainer wie Gepäckboxen in einem Flugzeug bekannt, bei welchem für die hängende Montage Schienen eingesetzt werden, die an der Rumpfkonstruktion des Flugzeuges befestigt sind. An den Gepäckboxen sind Rollen befestigt, welche in Längshohlräume eingreifen, die in den Schienen gebildet sind. Zum Verriegeln der hängend montierten Deckencontainer werden zwei Arten von Verriegelungen eingesetzt, nämlich oben liegende Riegel, die an den Schienen befestigt sind und die Rollen in den Schienen halten, aber manuell lösbar sind, damit die Rollen und somit die Gepäckboxen aus den Schienen entfernt werden können. Die zweite Art von Verriegelung erfolgt durch Außenbordkoppler, die an den Deckencontainern befestigt sind und in Außenbordriegel eingreifen, welche an der Tragstruktur befestigt sind. Die Außenbordriegel sind mit den oben liegenden Riegeln gekoppelt und arbeiten gleichzeitig mit den oben liegenden Riegeln. Ein Mechaniker betätigt manuell den oben liegenden Riegel, wodurch sowohl der oben liegende Riegel als auch der Außenbordriegel in die entriegelte Position zur Entnahme des Deckencontainers bewegt werden. Die Außenbordriegel dienen zum weiteren Sichern der Gepäckboxen in ihrer Lage und erfüllen bei der hängenden Montage der Gepäckboxen keine Tragfunktion.

Aufgabe der Erfindung ist es, ein Befestigungssystem der eingangs genannten Art unter Beibehaltung der Montage mittels Bolzen und Tragösen so auszubilden, dass es ein schnelleres und einfacheres Montieren und Demontieren von Deckencontainern wie Gepäckboxen an einer Tragstruktur, insbesondere in Großraumflugzeugen, ermöglicht, wobei die Montage und Demontage mit zwei Personen, ohne spezielles Werkzeug und ohne lose Teile möglich sein soll.

Die Aufgabe wird erfindungsgemäß dadurch gelöst, dass in der Bolzenführung (40) eine Druckfeder (34) für das Vorspannen und Ausfahren des Bolzens angeordnet ist, dass zum Verriegeln des zurückgezogenen Bolzens (30) ein quer zu dem Bolzen (30) bewegliches Sperrelement (42) in eine an dem Bolzen (30) ausgebildete Ausnehmung (44) einfasst und dass an der Bolzenführung (40) ein Hebel (60) angelenkt ist zum manuellen Zurückziehen des Bolzens (30) in der Bolzenführung (40) und zum weiteren Ausfahren des Bolzens (30) bis in die Aufnahmehülse (26) der einen Tragöse (20).

Bei dem Befestigungssystem nach der Erfindung befindet sich der nicht ausgefahrene Bolzen unter Federvorspannung in der Bolzenführung. Der Bolzen ist somit kein loses Teil, sondern von vornherein an einer der Tragösen des Paares unverlierbar montiert. Das ermöglicht die Montage eines Deckencontainers durch weniger Personen als im Stand der Technik, weil der Deckencontainer lediglich soweit angehoben zu werden braucht, bis die an den Tragösen angebrachten Aufnahmehülsen im Wesentlichen miteinander fluchten. Dadurch wird der Bolzen entriegelt, der dann durch die vorhandene Federvorspannung in die Aufnahmehülse der anderen Tragöse ausgefahren wird. Damit ist der Deckencontainer an der einen Tragöse bereits eingerastet. Der Bolzen kann dann später bei Bedarf manuell vollends ausgefahren und in die Aufnahmehülse der einen Tragöse eingeführt werden. Die Demontage ist in umgekehrter Reihenfolge ebenso leicht möglicht, ohne dass zum Aus- und Einfahren des Bolzens ein spezielles Werkzeug benötigt wird. Eine der Personen, die den Deckencontainer mit nach oben in die Montageposition gehoben haben, ist nach dem ersten Einrasten der anderen Tragöse an der einen Tragöse frei und kann sich dem endgültigen Ausfahren des Bolzens widmen. Das Befestigungssystem nach der Erfindung ermöglicht somit eine einfachere Montage und Demontage von hängend montierbaren Deckencontainern wie Gepäckboxen in einem Flugzeug bei geringerem Personalaufwand. Die Sicherheit wird auch dadurch erhöht, dass keine losen Teile vorhanden sind, die verloren gehen und Störungen verursachen könnten. Gleichzeitig wird mehr Flexibilität bei der Kabinenausstattung erreicht. Das einfache erfindungsgemäße Befestigungssystem lässt viel mehr Varianten als im Stand der Technik zu.

Bei dem Befestigungssystem nach der Erfindung fasst zum Verriegeln des zurückgezogenen Bolzens ein quer zu dem Bolzen bewegliches erstes Sperrelement in eine an dem Bolzen ausgebildete Ausnehmung ein. Das ermöglicht, den in die Bolzenführung eingefahrenen Bolzen in dieser Stellung, in der er federnd vorgespannt ist, mit Hilfe des ersten Sperrelements, das in die an dem Bolzen ausgebildete Ausnehmung einfasst, lösbar zu verriegeln. Das erste Sperrelement wird entriegelt, indem die Aufnahmehülsen des Tragösenpaares wenigstens annähernd in Deckung gebracht werden. Sobald das erste Sperrelement die an dem Bolzen ausgebildete Ausnehmung verlässt, wird der Bolzen aufgrund der Federvorspannung in die Aufnahmehülse der mit der Bolzenführung versehenen einen Tragöse ausgefahren.

Weiter ist bei dem Befestigungssystem nach der Erfindung in der Bolzenführung eine Druckfeder für das Vorspannen und Ausfahren des Bolzens angeordnet. Diese weitere Druckfeder ist in der eingefahrenen Stellung des Bolzens gespannt, so dass das selbsttätige Ausfahren des Bolzens gewährleistet ist, sobald das Sperrelement aus der an dem Bolzen ausgebildeten Ausnehmung entfernt wird.

Ferner ist bei dem Befestigungssystem nach der Erfindung an der Bolzenführung ein Hebel angelenkt zum manuellen Zurückziehen des Bolzens in die Bolzenführung und zum weiteren Ausfahren des Bolzens bis in die Aufnahmehülse der einen Tragöse. Durch die Vorbelastung durch die Druckfeder wird der Bolzen bei seiner Entriegelung bis in die Aufnahmehülse der anderen Tragöse ausgefahren. Mit dem Hebel kann dann anschließend der Bolzen manuell weiter ausgefahren werden, bis sich sein freies Ende in der Aufnahmehülse der mit der Bolzenführung versehenen einen Tragöse befindet. Diese Endstellung des Bolzens entspricht einer Endstellung des Hebels, der somit zugleich ein Zurückfahren des Bolzens in die Bolzenführung verhindert.

Vorteilhafte Ausgestaltungen des Befestigungssystems nach der Erfindung bilden die Gegenstände der Unteransprüche.

In einer Ausgestaltung des Befestigungssystems nach der Erfindung ist das Sperrelement ein Teil eines an der einen Tragöse beweglich gelagerten und bei dem Indeckungbringen der Aufnahmehülsen der Tragösen durch die andere Tragöse verschiebbaren Auslösebügels. Durch das Hochheben des Deckencontainers in die Montageposition wird der Auslösebügel durch die andere Tragöse betätigt. Dadurch wird das Sperrelement aus der an dem Bolzen ausgebildeten Ausnehmung herausbewegt, so dass der Bolzen dann aufgrund seiner Federvorspannung selbsttätig ausgefahren wird, um die andere Tragöse an der mit der Bolzenführung versehenen einen Tragöse einzurasten.

In einer weiteren Ausgestaltung des Befestigungssystems nach der Erfindung ist der Auslösebügel in Richtung der Bolzenführung und der Aufnahmehülse der einen Tragöse durch mindestens eine weitere Druckfeder vorbelastet. Dadurch ist sichergestellt, dass das Sperrelement in die an dem Bolzen ausgebildete Ausnehmung einfasst, solange die andere Tragöse nicht in die mit der Bolzenführung versehene eine Tragöse eingeführt worden ist, um den Auslösebügel anzuheben.

In einer weiteren Ausgestaltung des Befestigungssystems nach der Erfindung ist der Hebel in einer Schließposition durch eine Sicherung lösbar verriegelbar. Auf diese Weise wird auch der Hebel selbst gegen ein ungewolltes Zurückbewegen gesichert. Das Befestigungssystem ist damit gegen ein Lösen des Bolzens, sei es durch Vibrationen oder andere mechanische Umstände, gesichert.

In einer weiteren Ausgestaltung des Befestigungssystems nach der Erfindung greift der Hebel in der Schließposition mit seinem freien Ende in einen federnden Teil der Sicherung ein und wird durch diesen zurückgehalten. Zu diesem Zweck würde es ausreichen, an dem federnden Teil der Sicherung eine Öffnung anzubringen, in welche ein Ende des Hebels beim Schließen einrastet.

Dadurch, dass der Hebel über die Sicherung in der Schließposition lösbar verriegelbar ist, wird sichergestellt, dass sich der Hebel und somit der Bolzen nicht unbeabsichtigt aus der Aufnahmehülse zurückbewegen kann. Beim Anheben und Einführen der anderen Tragöse mit dem Deckencontainer muss sichergestellt sein, dass der Bolzen in geöffnetem Zustand in die Bolzenführung eingefahren ist. Die andere Tragöse kann so ungehindert mit ihrer Aufnahmehülse in der Achse des Bolzens positioniert werden. Erst durch das mechanische Lösen des Sperrelements von dem Bolzen kann dieser durch die Vorbelastung seiner Druckfeder in die Aufnahmehülse der mit der Bolzenführung versehenen einen Tragöse eindringen.

In einer weiteren Ausgestaltung des Befestigungssystems nach der Erfindung ist an den Hebel eine Feder angebracht, die beim Lösen der Sicherung den Hebel aus der Schließposition bringt. Dadurch wird der Hebel in der Schließposition gegen die Öffnung oder einen Anschlag an dem federnden Teil der Sicherung gedrückt. Die Sicherungswirkung wird damit nicht nur verstärkt, sondern beim Lösen der Sicherung wird der Hebel automatisch mindestens in einem gewissen Ausmaß aufgeklappt. Dadurch wird es einfacher, den Hebel von Hand zu ergreifen und die Tragösen durch Zurückbewegen des Bolzens in die Bolzenführung vollkommen voneinander zu lösen.

In einer weiteren Ausgestaltung des Befestigungssystems nach der Erfindung bildet der Hebel mit einem an dem Bolzen angelenkten Verbindungsglied einen Kniehebel zum Aus- und Einfahren sowie zum Sichern des Bolzens. Nachdem der Bolzen durch seine Druckfeder selbsttätig in die Aufnahmehülse der anderen Tragöse geschoben worden ist, kann nun durch anschließendes Schließen des Hebels die gegenseitige Verriegelung der Tragösen durch den Bolzen endgültig gesichert werden.

In einer weiteren Ausgestaltung des Befestigungssystems nach der Erfindung sind ein erstes Paar Tragösen und ein zweites Paar Tragösen an zwei benachbarten Aufhängepunkten von zwei benachbarten Deckencontainern an einem an der Tragstruktur befestigten Mehrfachtragbügel neben einander angebracht. Die Anordnung ist dabei so getroffen, dass bei montierten Deckencontainern zum Beispiel der eine Deckencontainer mit dem ersten Tragösenpaar an einer Ausweichbewegung in X-, Y- und Z-Richtung und der andere Deckencontainer mit dem zweiten Tragösenpaar an einer Ausweichsbewegung in Y- und Z-Richtung gehindert ist.

Ausführungsbeispiele der Erfindung werden im Folgenden unter Bezugnahme auf die Zeichnungen näher erläutert. Es zeigt:
- Fig. 1: in einer Längsschnittansicht ein Befestigungssystem nach der Erfindung im demontierten Zustand,
- Fig. 2: das Befestigungssystem nach Fig. 1 in einer ersten Phase eines Montagezustands,
- Fig. 3: das Befestigungssystem nach Fig. 1 in einem vollständig montierten Zustand,
- Fig. 4: ein Befestigungssystem nach der Erfindung mit zwei Paar Tragösen zum gleichzeitigen Befestigen von zwei benachbarten Deckencontainern an zwei benachbarten Aufhängepunkten, wobei ein Tragösenpaar im montierten und ein Tragösenpaar im demontierten Zustand gezeigt ist,
- Fig. 5: das Befestigungssystem nach Fig. 4 in einer perspektivischen Darstellung und
- Fig. 6: das Befestigungssystem nach den Fig. 4 und 5 in einer auseinandergezogenen Darstellung.

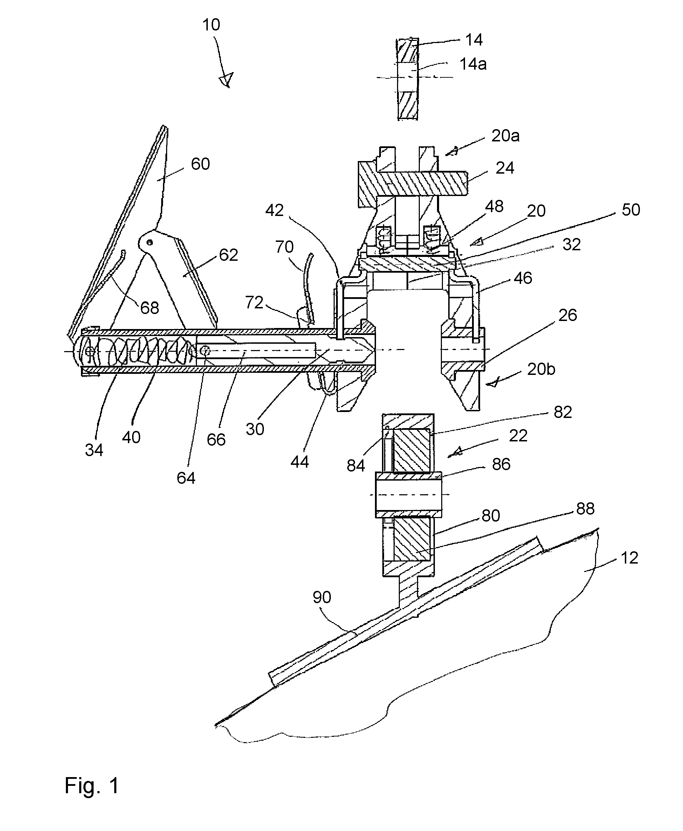

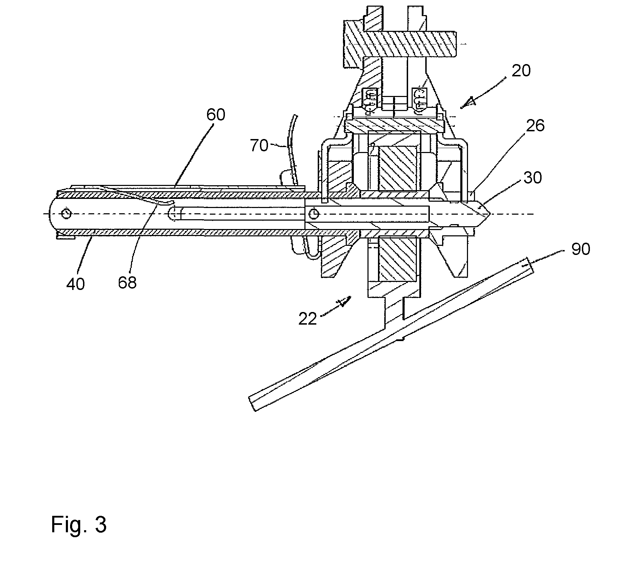

Fig. 1 zeigt in einer Längsschnittansicht ein insgesamt mit 10 bezeichnetes Befestigungssystem zur hängenden Montage eines in Fig. 1 nur angedeuteten Deckencontainers 12 an einer in Fig. 1 nur angedeuteten Tragstruktur 14. Bei dem Deckencontainer 12 kann es sich um eine Gepäckbox od. dgl. in einem Flugzeug handeln. Das Befestigungssystem 10 umfasst ein Paar Tragösen, die insgesamt mit 20 bzw. 22 bezeichnet sind. Die Tragöse 20 ist zur Befestigung an der Tragstruktur 14 ausgebildet. Die Tragöse 22 ist an dem Deckencontainer 12 befestigt. Die beiden Tragösen 20, 22 könnten, wie eingangs bereits erwähnt, gegeneinander vertauscht werden. Das Befestigungssystem 10 ist, in Fig. 1 im demontierten Zustand gezeigt, das heißt die Tragösen 20, 22 sind nicht durch einen Bolzen 30 miteinander verbunden, wie es für den montierten Zustand in Fig. 3 gezeigt ist, sondern noch voneinander getrennt. Durch den Bolzen 30 sind die Tragösen 20, 22 lösbar miteinander verbindbar. Im Folgenden werden nun die beiden Tragösen zunächst jeweils für sich im Einzelnen beschrieben.

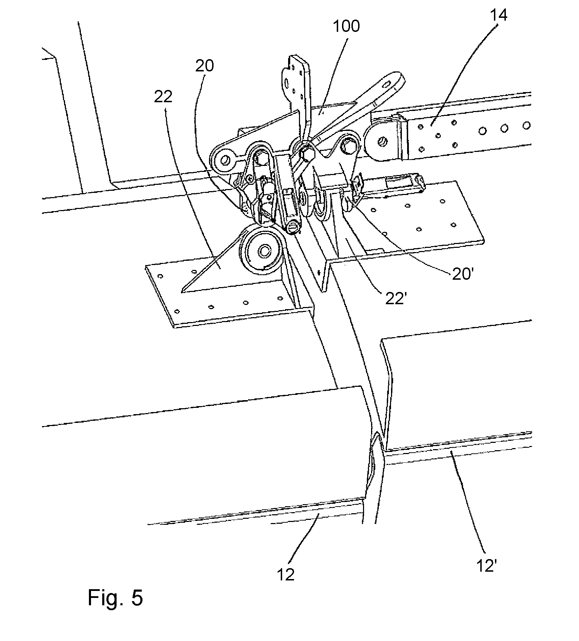

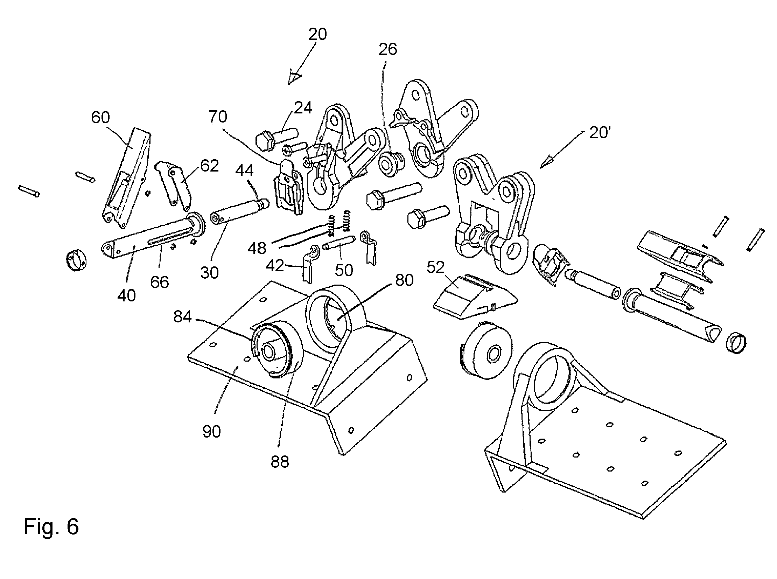

Die Tragöse 20 ist ein Bauteil, an dem zwei Gabeln ausgebildet sind, nämlich eine in der Darstellung in Fig. 1 obere Gabel 20a und eine in der Darstellung in Fig. 1 untere Gabel 20b. Zur Befestigung der Tragöse 20 an der Tragstruktur 14 wird diese zwischen den beiden Schenkeln der oberen Gabel 20a aufgenommen. Eine feste Verbindung wird mit Hilfe einer Schraube 24 hergestellt, die durch eine Durchgangsbohrung 14a in der Tragstruktur 14 hindurchgeführt wird. Zum Festlegen der Schraube in der oberen Gabel 20a kann eine nicht dargestellte Mutter oder eine in dem in Fig. 1 rechten Gabelschenkel ausgebildete Gewindebohrung zum Einsatz kommen. Zwischen der oberen Gabel 20a und der Tragstruktur 14 kann gemäß Fig. 5 ein Mehrfachtragbügel 100 angeordnet sein, auf den weiter unten näher eingegangen wird. In dem rechten Schenkel der unteren Gabel 20b ist eine Aufnahmehülse 26 für den Bolzen 30 befestigt. Auf der Achse der Aufnahmehülse 26 ist in dem linken Schenkel der unteren Gabel 20b, also fluchtend mit der Aufnahmehülse 26 eine Bolzenführung 40 wie dargestellt angebracht. Die beiden Gabeln 20a und 20b und damit die Tragöse 20 sind längs einer Trennfuge 32 geteilt und somit zerlegbar, wie in der auseinandergezogenen Darstellung in Fig. 6 zu erkennen ist, in welcher die Tragöse 20 oben links gezeigt ist.

Der Bolzen 30 ist in Fig. 1 in die Bolzenführung 40 zurückgezogen gezeigt. Der Bolzen 30 ist in der zurückgezogenen Position durch ein quer zu dem Bolzen bewegliches Sperrelement 42 verriegelt, das in eine an dem Bolzen 30 ausgebildete Ausnehmung 44 einfasst. Die Ausnehmung 44 ist in dem gezeigten Ausführungsbeispiel als eine Ringnut ausgebildet. Das Sperrelement 42 ist ein Teil eines an der Tragöse 20 beweglich gelagerten Auslösebügels 46, der in Richtung der Bolzenführung 40 und der Aufnahmehülse 26 der Tragöse 20 durch zwei Druckfedern 48 vorbelastet ist. Der Auslösebügel hat zwei Schenkel, von denen der eine das Sperrelement 42 ist und von denen der andere wie das Sperrelement 42 ausgebildet ist, aber nur als Führung dient. Diese beiden Arme sind durch einen Querstift 50 fest miteinander verbunden. Mit dem Querstift 50 kommt die Tragöse 22 in Berührung, wenn der Deckencontainer 12 angehoben wird, um die Tragösen gegenseitig in eine Montageposition zu bringen, was weiter unten noch näher beschrieben ist. Aufgrund der Vorbelastung durch die Druckfedern 48 bleibt das Sperrelement 60 in der Ausnehmung 44 des Bolzens 30 eingerastet und somit bleibt der Bolzen 30 in seiner in Fig. 1 gezeigten Position, in welcher er durch eine Druckfeder 34 in Richtung der Aufnahmehülse 26 vorgespannt ist, solange der Auslösebügel 46 nicht durch die Tragöse 22 angehoben wird. Die Druckfeder 34 ist in Fig. 1 angedeutet und in Fig. 6 nicht gezeigt.

An der Bolzenführung 40 ist ein Hebel 60 angelenkt. Ein Verbindungsglied 62 ist an seinem einen Ende an dem Hebel 60 und an seinem anderen Ende an dem Bolzen 30 angelenkt. Die Anlenkverbindung an dem Bolzen 30 umfasst einen Anlenkstift 64, der in zwei einander gegenüberliegenden Längsschlitzen 66 der Bolzenführung 40 nach außen vorsteht und in zwei entsprechenden Bohrungen des Verbindungsglieds 42 gelagert ist. Der Hebel 60 bildet so mit dem Verbindungsglied 62 einen Kniehebel zum Aus- und Einfahren sowie zum Sichern des Bolzens 30. Durch Verschwenken des Hebels 60 im Gegenuhrzeigersinn in die in Fig. 1 gezeigte Stellung wird der Bolzen 30 in die Bolzenführung 40 zurückgezogen, bis das Sperrelement 42 in die Ausnehmung 44 einrastet. Bei diesem Zurückziehen wird die Druckfeder 34 gespannt. Zum Ausfahren des Bolzens 30 aus der Bolzenführung 40, was weiter unten näher beschrieben ist, wird der Hebel 60 im Uhrzeigersinn verschwenkt, bis er in einer Schließposition, die in Fig. 3 gezeigt ist, auf der Bolzenführung 40 aufliegt. Die Bolzenführung 40 trägt eine Sicherung 70, die als eine Art Federklammer ausgebildet ist. Wenn der Hebel 60 im Uhrzeigersinn verschwenkt wird, drückt er mit seinem freien Ende die Sicherung 70 in Fig. 1 nach rechts und gelangt mit seinem freien Ende schließlich in eine Öffnung 72, woraufhin die Sicherung 70 zurückschwenkt und den Hebel 60 in der Schließposition festhält. An dem Hebel 60 ist eine Blattfeder 68 angebracht, die beim Lösen der Sicherung 70 den Hebel 60 aus der Schließposition bringt.

Die Tragöse 22 umfasst ein Auge 80, in welchem eine Aufnahmehülse 86 für den Bolzen 30 in einer Stoßdämpfungsbuchse 88 zentrisch gelagert ist. Die Stoßdämpfungsbuchse 88 stützt sich in dem Auge 80 in Fig. 1 rechts an einer Ringschulter 82 ab und wird durch einen Federring 84 in dem Auge 80 gehalten. Das Auge 80 ist Teil einer Konsole 90, die an der Außenseite des Deckencontainers 12 befestigt ist.

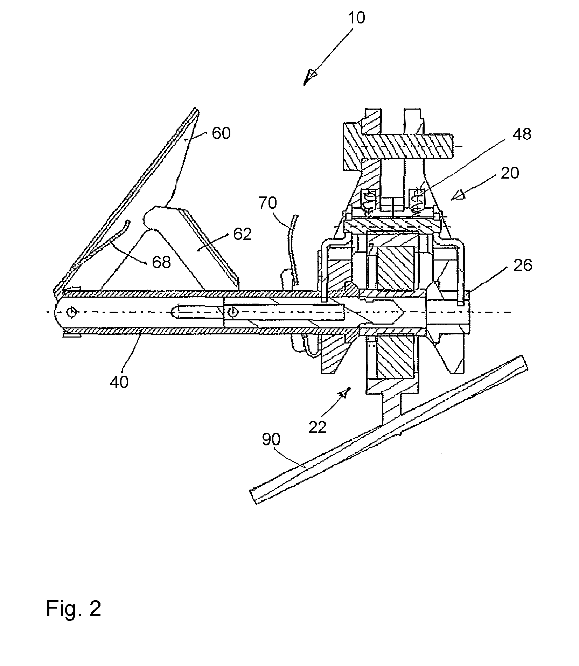

Anhand der Darstellung in den Fig. 1 - 3 werden nun die Montage und die Demontage des Deckencontainers 12 beschrieben. Fig. 1 zeigt Ausgangspositionen der Tragösen 20 und 22. In der Ausgangsposition der Tragöse 20 ist der Bolzen 30 in die Bolzenführung 40 eingefahren und durch das Sperrelement 42 verriegelt. Die Druckfeder 34 ist gespannt. Mehrere Personen heben nun den Deckencontainer 12 weiter an, bis die Tragöse 22 gegen den Querstift 50 des Auslösebügels 46 stößt und den Auslösebügel 46 nach oben drückt. Dadurch wird das Sperrelement 42 angehoben und verlässt die Ausnehmung 44. Dabei werden die Aufnahmehülsen 26 und 86 der Tragösen 20 bzw. 22 in Deckung gebracht. Durch die gespannte Druckfeder 34 wird der nun entriegelte Bolzen 30 in die Aufnahmehülse 86 der Tragöse 22 geschoben, wie es in Fig. 2 gezeigt ist. Der Hebel 60 wird dabei selbsttätig etwas im Uhrzeigersinn verschwenkt, wie es ebenfalls in Fig. 2 gezeigt ist. Der Deckencontainer 12 ist nun an der Tragöse 20 bereits vorläufig eingerastet, so dass wenigstens eine der Personen, die den Deckencontainer 12 in die Montageposition angehoben haben, frei ist, um den Hebel 60 zu betätigen und den Deckencontainer 12 in seiner Montageposition endgültig zu sichern. Zu diesem Zweck verschwenkt die Bedienungsperson den Hebel 60 aus der in Fig. 2 gezeigten Position weiter im Uhrzeigersinn in die in Fig. 3 gezeigte Schließposition, in welcher die Blattfeder 68 ebenso wie der Hebel 60 außen auf der Bolzenführung 40 aufliegt, wobei der Hebel 60 in dieser Stellung durch die Sicherung 70 gehalten wird. Bei der Bewegung in diese Schließposition wird der Bolzen 30 durch den Hebel 60 über das Verbindungsglied 62 weiter nach rechts verschoben, bis er die in Fig. 3 gezeigte Stellung einnimmt, in welcher der Bolzen 30 in die Aufnahmehülse 26 der Tragöse 20 eingefahren ist.

Zum Demontieren des Deckencontainers 12 wird die Sicherung 70 von Hand aus der in Fig. 3 gezeigten Stellung etwas nach rechts bewegt, bis die Sicherung 70 den Hebel 60 freigibt. Dieser wird durch die Blattfeder 68, die sich auf der Bolzenführung 40 abstützt, etwas nach oben gedrückt, so dass er bequemer mit der Hand erfasst und im Gegenuhrzeigersinn über die Stellung nach Fig. 2 in die Endstellung nach Fig. 1 bewegt werden kann, in welcher der Bolzen 30 wieder in die Bolzenführung 40 zurückgezogen ist, das Sperrelement 42 wieder in der Ausnehmung 44 eingerastet ist und die Druckfeder 34 wieder gespannt ist.

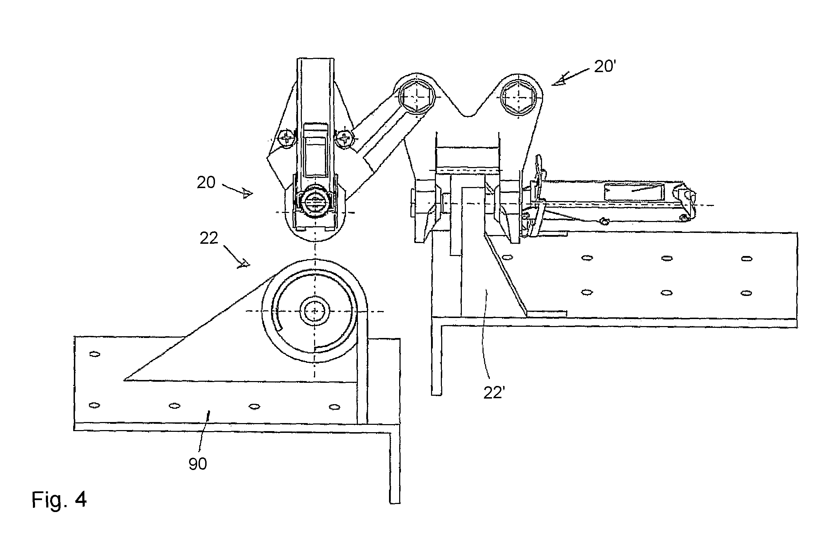

Gemäß der Darstellung in den Fig. 4 - 6 sind ein erstes Paar Tragösen 20, 22 und ein zweites Paar Tragösen 20', 22' an zwei benachbarten Aufhängepunkten von zwei benachbarten Deckencontainern 12, 12' an einem an der Tragstruktur 14 befestigten Mehrfachtragbügel 100 neben einander angebracht, und zwar in Fig. 5 in montiertem Zustand und in Fig. 4 im demontierten Zustand. Die Tragöse 20' unterscheidet sich von der Tragöse 20 lediglich dadurch, dass sie nicht längs einer Trennfuge geteilt ist und dass sie zusätzlich noch eine Zentrierkappe 52 aufweist, die die Tragöse 22' in eine mittige Position leitet, um das Indeckungbringen der Aufnahmehülsen 36, 86 zu erleichtern. Die Tragöse 20 selbst ist innen so geformt, dass die Tragöse 22 in eine mittige Position geleitet wird.

### Bezugszeichenliste

- 10: Befestigungssystem
- 12, 12': Deckencontainer
- 14: Tragstruktur
- 14a: Durchgangsbohrung
- 20, 20': Tragöse
- 20a: obere Gabel
- 20b: untere Gabel
- 22, 22': Tragöse
- 24: Schraube
- 26: Aufnahmehülse
- 30: Bolzen
- 32: Trennfuge
- 34: Druckfeder
- 36: Aufnahmehülse
- 40: Bolzenführung
- 42: Sperrelement
- 44: Ausnehmung
- 46: Auslösebügel
- 48: Druckfeder
- 50: Querstift
- 52: Zentrierkappe
- 60: Hebel
- 62: Verbindungsglied
- 64: Anlenkstift
- 66: Längsschlitz
- 68: Blattfeder
- 70: Sicherung
- 72: Öffnung
- 80: Auge
- 82: Ringschulter
- 84: Federring
- 86: Aufnahmehülse
- 88: Stoßdämpfungsbuchse
- 90: Konsole
- 100: Mehrfachtragbügel

## Patentansprüche

1. Befestigungssystem für hängend montierbare Deckencontainer wie Gepäckboxen in einem Flugzeug,
mit wenigstens einem Paar an einer Tragstruktur bzw. an einem Deckencontainer angebrachten Tragösen,
mit einem Bolzen zum lösbaren Miteinanderverbinden der Tragösen und mit an den Tragösen angebrachten Aufnahmehülsen für den Bolzen, die in einer Montageposition eines Deckencontainers miteinander fluchten, **dadurch gekennzeichnet, dass** an einer der Tragösen (20, 22) fluchtend mit deren Aufnahmehülse (26) eine Bolzenführung (40) angebracht ist, in welcher der Bolzen (30) zurückgezogen, aber in Richtung der Aufnahmehülse (26) federnd vorgespannt verriegelbar und durch Indeckungbringen der Aufnahmehülsen (26, 86) des Tragösenpaares (20, 22) entriegelbar und wenigstens in die Aufnahmehülse (86) der anderen Tragöse (22) ausfahrbar ist,
dass in der Bolzenführung (40) eine Druckfeder (34) für das Vorspannen und Ausfahren des Bolzens angeordnet ist,
dass zum Verriegeln des zurückgezogenen Bolzens (30) ein quer zu dem Bolzen (30) bewegliches Sperrelement (42) in eine an dem Bolzen (30) ausgebildete Ausnehmung (44) einfasst und
dass an der Bolzenführung (40) ein Hebel (60) angelenkt ist zum manuellen Zurückziehen des Bolzens (30) in der Bolzenführung (40) und zum weiteren Ausfahren des Bolzens (30) bis in die Aufnahmehülse (26) der einen Tragöse (20).

2. Befestigungssystem nach Anspruch 1, **dadurch gekennzeichnet, dass** Sperrelement (42) ein Teil eines an der einen Tragöse (20) gelagerten und bei dem Indeckungbringen der Aufnahmehülsen (26, 86) der Tragösen (20, 22) durch die andere Tragöse (22) verschiebbaren Auslösebügels (46) ist.

3. Befestigungssystem nach Anspruch 2, **dadurch gekennzeichnet, dass** der Auslösebügel (46) in Richtung der Bolzenführung (40) und der Aufnahmehülse (26) der einen Tragöse (20) durch mindestens eine weitere Druckfeder (48) vorbelastet ist.

4. Befestigungssystem nach einem der vorhergehenden Ansprüche, **dadurch gekennzeichnet, dass** der Hebel (60) in einer Schließposition durch eine Sicherung (70) lösbar verriegelbar ist.

5. Befestigungssystem nach Anspruch 4, **dadurch gekennzeichnet, dass** der Hebel (60) in der Schließposition mit seinem freien Ende in einen federnden Teil der Sicherung (70) eingreift und durch diesen zurückgehalten wird.

6. Befestigungssystem nach einem der vorhergehenden Ansprüche, **dadurch gekennzeichnet, dass** an dem Hebel (60) eine Feder (68) angebracht ist, die beim Lösen der Sicherung (70) den Hebel (60) aus der Schließposition bringt.

7. Befestigungssystem nach einem der vorhergehenden Ansprüche, **dadurch gekennzeichnet, dass** der Hebel (60) mit einem an dem Bolzen (30) angelenkten Verbindungsglied (62) einen Kniehebel zum Aus- und Einfahren sowie zum Sichern des Bolzens (30) bildet.

8. Befestigungssystem nach einem der vorhergehenden Ansprüche, **dadurch gekennzeichnet, dass** ein erstes Paar Tragösen (20, 22) und ein zweites Paar Tragösen (20', 22') an zwei benachbarten Aufhängepunkten von zwei benachbarten Deckencontainern an einem an der Tragstruktur (14) befestigten Mehrfachtragbügel (100) neben einander anbringbar oder angebracht sind.

## Claims

1. A fastening system for pendant-mountable overhead containers, such as stowage bins in an aircraft,
with at least one pair of support lugs attached to a support structure or to an overhead container,
with a pin for the releasable interconnection of the support lugs, and
with receiving sleeves for the pin, which sleeves are attached to the support lugs and are aligned with one other in an assembled position of an overhead container,
characterised that a pin guide (40) is attached to one of the support lugs (20,22) aligned with its receiving sleeve (26), in which pin guide the pin (30) is retracted but can be locked with spring-loading in the direction of the receiving sleeve (26) and can be locked by bringing the receiving sleeves (26,86) of the support lug pair (20,22) into alignment and can be extended at least into the receiving sleeve (86) of the other support lug (22),
in that a compression spring (34) for the preloading and extending out of the pin is arranged in the pin guide (40),
in that for locking the retracted pin (30) a locking element (42), which can move transversely to the pin (30), engages in a recess (44) formed on the pin (30), and
in that a lever (60) is articulated on the pin guide (40) for the manual retraction of the pin (30) in the pin guide (40) and for further extending the pin (30) into the receiving sleeve (26) of one support lug (20).

2. A fastening system according to Claim 1, **characterised in that** the locking element (42) is a part of a release bracket (46) which is mounted on one support lug (20) and which can be displaced through the other support lug (22) when the receiving sleeves (26,86) of the support lugs (20,22) are brought into alignment.

3. A fastening system according to Claim 2, **characterised in that** the release bracket (46) is biased in the direction of the pin guide (40) and the receiving sleeve (26) of one support lug (20) is biased by at least one further compression spring (48).

4. A fastening system according to any one of the preceding Claims, **characterised in that** the lever (60) can be locked releasably in a closed position by a securing device (70).

5. A fastening system according to according to Claim 4, **characterised in that** the lever (60) engages in the closed position with its free end in a spring part of the securing device (70) and is retained thereby.

6. A fastening system any one of the preceding Claims, **characterised in that** the spring (68) is attached to the lever (60), which spring brings the lever (60) out of the closed position when the securing device (70) is released.

7. A fastening system according to any one of the preceding Claims, **characterised in that** the lever (60) forms with a connection element (62) articulated to the pin (30) a toggle lever for extending and retracting, as well as for securing the pin (30).

8. A fastening system according to any one of the preceding Claims Claim 7, **characterised in that** a first pair of support lugs (20,22) and a second pair of support lugs (20',22') can be attached or are attached one next to the other at two adjacent suspension points of two adjacent overhead containers to a multiple mounting bracket (100) secured to the support structure (14).

## Revendications

1. Système de fixation de conteneurs de plafond pouvant être montés en suspension tels que des coffres à bagages dans un avion, comportant :
au moins une paire d'oeillets de suspension montés sur une structure support ou sur un conteneur de plafond,
un boulon permettant une liaison amovible des oeillets de suspension, et
un manchon de réception du boulon monté sur les oeillets de suspension et aligné avec celui-ci dans une position de montage d'un conteneur de plafond,
**caractérisé en ce que**
sur l'un des oeillets de suspension (20, 22) et en alignement avec son manchon de réception (26) est monté un élément de guidage du boulon (40) dans lequel le boulon (30) peut être bloqué en étant rétracté mais précontraint élastiquement dans la direction de réception (26), peut être débloqué par mise en alignement des manchons de réception (26, 86) des oeillets de suspension (20, 22) de la paire d'oeillets de suspension et
peut être déployé au moins dans le manchon de réception (86) de l'autre oeillet de suspension (22),
un ressort de pression (34) permettant la mise en précontrainte et le déploiement du boulon est monté dans l'élément de guidage du boulon (40),
pour permettre de bloquer le boulon (30) en position rétractée un élément de verrouillage (42) mobile transversalement à ce boulon (30) est inséré dans un évidement (44) formé sur le boulon (30),
sur l'élément de guidage du boulon (40) est articulé un levier (60) permettant la rétraction manuelle du boulon (30) dans cet élément (40) et le déploiement ultérieur de ce boulon (30) jusque dans le manchon de réception (26) de l'oeillet de suspension (20).

2. Système de fixation conforme à la revendication 1,
**caractérisé en ce que**
l'élément de verrouillage (42) est une partie d'un étrier de déclenchement (46) monté sur l'oeillet de suspension (20) et qui peut être déplacé en translation suite à la mise en alignement des manchons de réception (26, 86) des oeillets de suspension (20, 22) par l'autre oeillet de suspension (22).

3. Système de fixation conforme à la revendication 2,
**caractérisé en ce que**
l'étrier de déclenchement (46) est précontraint en direction de l'élément de guidage du boulon (40) et du manchon de réception (26) de l'oeillet de suspension (20) par au moins un autre ressort de pression (48).

4. Système de fixation conforme à l'une des revendications précédentes,
**caractérisé en ce que**
le levier (60) peut être bloqué de façon amovible dans une position de fermeture par un élément de sécurité (70).

5. Système de fixation conforme à la revendication 4,
**caractérisé en ce que**
dans sa position de fermeture, le levier (60) vient en prise, par son extrémité libre dans une partie élastique de l'élément de sécurité (70) et est maintenu par celle-ci.

6. Système de fixation conforme à l'une des revendications précédentes,
**caractérisé en ce que**
sur le levier (60) est monté un ressort (68) qui, lors du relâchement de l'élément de sécurité (70) extrait le levier (60) de sa position de fermeture.

7. Système de fixation conforme à l'une des revendications précédentes,
**caractérisé en ce que**
le levier (60) forme, avec un organe de liaison (62) articulé sur le boulon (30) un levier à genouillère permettant le déplacement de celui-ci dans un sens ou dans l'autre et la mise en sécurité de ce boulon (30).

8. Système de fixation conforme à l'une des revendications précédentes,
**caractérisé en ce qu'**
une première paire d'oeillets de suspension (20, 22) et une seconde paire d'oeillets de suspension (20', 22') peuvent être montées ou sont montées à proximité l'une de l'autre au niveau de deux points de suspension voisins de deux conteneurs de plafond voisin sur un étrier support multiple (100) fixé à la structure support (14).
